(19) Europäisches Patentamt
European Patent Office
Office européen des brevets

(11) Publication number: 0 187 045 B1

(12) # EUROPEAN PATENT SPECIFICATION

(45) Date of publication of patent specification: 31.07.91

(51) Int. Cl.[5]: C09D 11/00, C08F 2/46, C08F 257/02, C08F 299/00

(21) Application number: 85309491.0

(22) Date of filing: 24.12.85

(54) **Radiation curable macromonomer printing inks.**

(30) Priority: 28.12.84 US 687345

(43) Date of publication of application:
09.07.86 Bulletin 86/28

(45) Publication of the grant of the patent:
31.07.91 Bulletin 91/31

(84) Designated Contracting States:
BE DE FR GB IT NL

(56) References cited:
US-A- 3 786 116
US-A- 3 856 744

(73) Proprietor: ATOCHEM
4 & 8, Cours Michelet La Défense 10
F-92800 Puteaux(FR)

(72) Inventor: Kerr, Stuart R., II
116 Kelmer Avenue
Frazer Pennsylvania 19355(US)

(74) Representative: Cropp, John Anthony David et al
MATHYS & SQUIRE 10 Fleet Street
London, EC4Y 1AY(GB)

EP 0 187 045 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to radiation curable printing inks and to printing processes involving the use of such inks.

Printing inks require careful formulation to satisfy, in a cost effective manner, industrial needs and environmental concerns. Industrial needs include high color quality and reproducibility, durability, formulation ease, storage life, printing convenience, acceptable drying or cure rate, and a host of factors related to the print quality desired. At leapt four categories of inks have been developed to fulfill such needs. These are organic solvent-based inks, solventless oil-based inks, water-based inks and radiation-curable inks. The first three types rely on heat and/or evaporation for drying or cure, and therefore require careful temperature control and costly drying equipment, and introduce environmental problems such as the polluting effects of solvents.

Radiation curable inks originated primarily as faster curing and more convenient alternatives for the traditional types but development has been spurred by environmental legislation directed towards the polluting effects of the solvents or other components of the inks. Chemically, these inks comprise three types. The first is thiolene chemistry, in which a thiyl radical is photogenerated and adds to the double bond in the polyene. Although these systems cure rapidly, they suffer from odor problems from the sulfur compounds involved. In the second type, aryl diazonium salts admixed with epoxy resins liberate Lewis acids which then are photolyzed to cure the resins. The cure is extremely fast and is not inhibited by oxygen. However, the salts and acids formed are highly corrosive and therefore introduce handling problems.

Acrylate chemistry has largely supplemented the first two types of radiation curable inks because it provides the best compromise between high cure rate, low odor, good storage stability, and reasonable cost. Typically, acrylate-type radiation curable inks are dispersions of a pigment in a vehicle comprising photoinitiators, oligomers or prepolymers, and special additives in a liquid, radiation polymerizable monomer (also known as a "reactive diluent"). The oligomers or prepolymers contribute viscosity, tack, pigment wetting properties, flexibility, adhesiveness, gloss, hardness and chemical resistance, and generally are epoxy acrylates, polyester acrylates or urethane acrylates. The reactive diluents contribute to the same properties but especially to viscosity control during application and to crosslink density upon cure.

Nevertheless, as in radiation curing generally, radiation curable acrylate-type inks introduce their own problems. These include control of viscosity and flow, storage stability, suitable curing rate, safeguards against toxic components, inhibition of curing by air contact, and require careful attention to formulation of the inks if the advantages of radiation curing are to be realized.

Various systems have been developed based on acrylate chemistry. For example, U.S. patent 4,221,686 to Sakiyama et al discloses as a radiation curable ink vehicle a reactive mixture of (I) a carboxylic acid/polyisocyanate reaction product and (II) a carboxylic acid/epoxy reaction product, wherein at least one of I and II contains an unsaturated monobasic acid residue. The mixture is said to disperse pigments well, is useful without large amounts of organic solvent, and cured polymeric inks made therefrom are washable with hydrocarbon solvents. Nevertheless, the composition is complex and, as will become apparent from the description of the present invention, lacks the primary polymeric component of the inks of the inventicn.

U.S. Patent 4,163,809 - McGinniss et al, discloses a radiation curable coating composition for metals comprising a mixture of an ethylenically unsaturated polymerizable binder vehicle, a pigment, 0-10% by weight of a photoinitiator and a high $T_g$ (glass transition temperature) solid linear polymer containing a pendant reactive double bond. The high $T_g$ polymer is solubilized in the polymerizable material, has a molecular weight of about 1,000-50,000 and is said to enhance the adhesive properties of the composition. However, no utility such as inks is mentioned. Moreover, the high $T_g$ polymers of McGinniss et al are produced from copolymerizable monomers by peroxy or azo catalyzed addition polymerization. In contrast, the macromolecular monomers of the present invention are prepared by anionic polymerization of a vinyl aromatic monomer to form a "living" polymer, capping of the polymer and then terminating by reaction with a material which adds a polymerizable double bond. Hence, the high $T_g$ polymersof McGinness et al and the macromolecular monomers of the present invention are essentially dissimilar.

## SUMMARY OF THE INVENTION

It has now been found that certain macromolecular monomers (hereinafter sometimes called "macromonomers"), when dissolved in a liquid reactive diluent to which a colorant is added, provide non-aqueous radiation curable inks which require no inert solvent component and therefore can be 100% convertible to resin solids. This eliminates or minimizes several substantial problems of conventional curing,

namely, toxicity and/or pollution due to inert solvent, while simultaneously lowering process cost due to the absence of the solvent. In addition, most of the mass of the macromonomer component is a nontoxic vinyl aromatic such as polymerized styrene, thus further reducing the risk of toxicity. Still further, the macromonomer component is a thermoplastic material, the thermoplasticity of which may be moderated as desired by including, as a portion of the reactive diluent, one or more polyfunctional compounds for crosslinking to a desired degree the macromonomer chains formed as a result of the radiation curing.

By selection of the components with respect to viscosity, molecular weight, crosslinkability and other properties, radiation curable inks can be formulated having the desired combination of thermosetting properties, adhesiveness, colorant dispersability, viscosity, printability onto heat sensitive substrates, storage stability, color reproducibility and other processing properties, as well as hardness, durability and gloss of the cured inks. Moreover, because the inks do not require organic solvents, they are rapidly cured to 100% resin solids and the expense of thermal driers is eliminated. Outstanding properties of the inks include the ability of the macromonomer component to assist in the dispersion of the colorant and to lower the overall shrinkage of the ink films produced by radiation curing. These properties are believed attributable to the large mass of vinyl aromatic in the macromonomer.

Briefly, the radiation curable inks of the invention are solutions of thermoplastic macromonomer and a colorant in a free radical polymerizable reactive diluent. The macromonomer is based upon a vinyl aromatic monomer, such as styrene, having a molecular weight (number average) of 2,000 to 50,000, and has a polymerizable ethylenically unsaturated end group. The macromonomer thus has the thermoplastic properties generally characteristic of a vinyl aromatic polymer but is capable of copolymerizing with other, lower molecular weight, monomers to form thermoplastic or thermoset products depending on the functionality of the comonomers.

In another aspect of the invention, one or more additives are blended into the solution of macromonomer, reactive diluent and colorant often with a resultant unexpected order of enhancement, in the radiation cured inks, of properties attributable to the additives.

In still another aspect, a method of printing is provided in which the foregoing radiation curable inks are applied to an ink receptive substrate to provide desired coloration and/or indicia, the inks then being subjected to actinic radiation in order to cure the inks to a hard, durable, high quality print.

## DETAILED DESCRIPTION

The radiation curable inks of the invention are mixtures of the following major components, wherein the amounts are based on total composition:

(A) 5-80% by weight of a thermoplastic macromonomer of the formula:

$$R{\leftarrow}Z{\rightarrow}_n X$$

wherein R is a hydrocarbon or alkoxyl group containing up to 20 carbon atoms, Z is a vinyl aromatic monomer, such as styrene alpha-methylstyrene, nuclear-methylstyrene, indene and p-tert-butylstyrene, n is a positive integer such that the number average molecular weight of ${\leftarrow}Z{\rightarrow}_n$ is 2,000-50,000, and X is a polymerizable ethylenically unsaturated end group;

(B) 20-95% by weight of liquid radiation-polymerizable monomeric diluent which copolymerizes with and initially also solubilizes macromonomer (A);

(C) 0 to 20% by weight of a radiation responsive free radical initiator; and

(D) an effective amount of a colorant, e.g., 1-50% by weight.

Preferably, the amount of macromonomer (A) is 10-50% by weight, the amount of reactive diluent (B) is 50-90% by weight, the amount of the free radical initiator (C) is 0 to 20% by weight and the amount of colorant (D) is 10 to 30% by weight, based on total composition. The more preferred compositions for curing by lower energy radiation such as ultraviolet light will contain about 5-15% by weight of a photoinitiator (C) and other additives as desired, for improved rheology, tack reduction and other properties. Within the foregoing ranges considerable variation is possible, depending on the character and amounts of the individual components, the desired curing rate, the contribution to final properties desired from the additives, and other considerations apparent to the skilled practitioner.

Macromonomer component (A) is a solid, thermoplastic material and is described together with synthesis in U.S. Patent 3,786,116 - Milkovich and Chiang, hereinafter sometimes referred to as the "Milkovich Patent". However, it is believed that macromonomers useful in the present invention may have molecular weights lower than the 5,000 molecular weight lower limit described in the Milkovich patent and may have a molecular weight distribution (also known as "polydispersity", $M_w/M_n$) greater than the 1.1

upper limit described in the Milkovich patent. Thus the molecular weight (number average) of the macromonomers of the present invention attributable to the vinyl aromatic portion of the monomer may range from 2,000 to 50,000, preferably from 3,000 to 30,000, and the molecular weight distribution may range up to 3 or more, the preferable upper limit being about 2. Blends of the macromonomers may also be used to provide desired ranges of properties. For example, combinations of lower molecular weight materials with higher molecular materials may provide a range of crystallinity and/or thermoplasticity or compatibility with additives, not otherwise easily attained, analogous to polymer alloys.

In the macromonomer formula $R\{Z\}_n$ X the polymerizable end group (X) itself may be oligomeric or polymeric, a straight or branched-chain group, aliphatic or aromatic; and may contain one or more oxygen atoms. Generally, X may contain up to 250 carbon atoms. Prefered structures of X are the following:

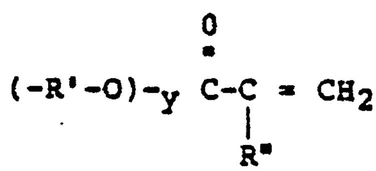

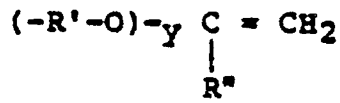

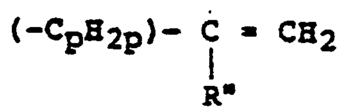

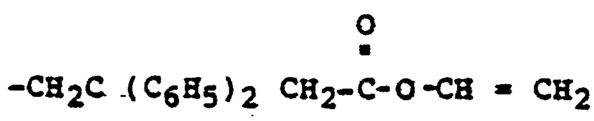

$-CH_2C_6H_4\ CH = CH_2$ and

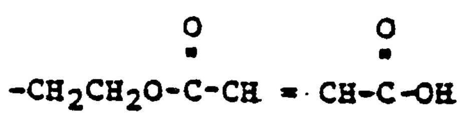

wherein R' is phenylethylene or $C_mH_{2m}$, m is 2, 3 or 4, p is a positive integer of from 2 to 8, y is a positive integer of from 1 to 50, and R" is hydrogen or lower alkyl ($C_1$-$C_8$).Most preferably X is the residue of the reaction of an ethylene oxide group with acryloyl chloride or methacryloyl chloride and is thus defined by the structure

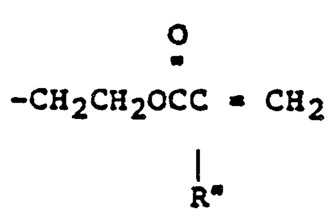

where R" is hydrogen or methyl.

From the standpoint of economical synthesis and versatility of application the most preferred macromonomer is $R\{Z\}_nX$ wherein R is lower alkyl (preferably 4 to 8 carbon atoms), Z is phenylethylene and X is

$$-CH_2CH_2O\overset{O}{\overset{\|}{C}}\underset{R''}{\underset{|}{C}} = CH_2$$

where R"is hydrogen or methyl.

Reactive, diluent component (B) preferably comprises one or more free radical polymerizable, radiation curable, substantially non-volatile, liquid monomers or oligomers of up to 2000 molecular weight, of which at least 10% by weight (of the total of 20-95% by weight) is polyethylenically unsaturated material, the balance (if any) being monoethylenically unsaturated material. The presence of the polyethylenically unsaturated material introduces a higher degree of thermosetting properties manifested by higher crosslinking density in the radiation cured inks than would normally be acceptable if the compositions were used as coatings or adhesives. However, in inks the resulting thermosetting properties are desirable for faster cure, chemical and stain resistance, higher Tg, heat and degradation resistance, and other properties. The polyunsaturated material therefore may comprise a major proportion of the reactive diluent or all of the diluent.

Representative radiation polymerizable monoethylenically unsaturated liquids are vinyl monomers such as the lower alkyl esters of acrylic or methacrylic acid including methyl methacrylate, ethyl acrylate, 2-ethylhexyl acrylate, butyl acrylate and isobutyl methacry late; the corresponding hydroxyl acrylates and methacrylate such as hydroxyethyl acrylate and hydroxypropyl acrylate; vinyl esters such as vinyl acetate and vinyl propionate; vinyl halides such as vinyl chloride and vinylidene chloride; and particularly high solvency monomers such as 2,2-ethoxyethoxyethyl acrylate, tetrahydrofurfuryl acrylate n-lauryl acrylate, 2-phenoxyethyl acrylate, glycidyl acrylate, glycidyl methacrylate, isodecyl acrylate, isooctyl acrylate, and the like. Other monoethylenically unsaturate reactive diluents include vinyl aromatics such as styrene, alpha-methylstyrene, vinyl toluene, indene and p-tertbutyl styrene; ethylenically unsaturated acids and derivatives thereof such as fumaric acid or maleic anhydride and the esters thereof; and nitrogen containing monomers such as acrylonitrile, methacrylonitrile, acrylamide, methacrylamide, N,N-dimethacrylamide, N-vinylpyrrolidine, N-vinylcaprolactam, and the like. As a general rule, the foregoing monounsaturated monomers will have lower Tg (as homopolymer) than the macromonomer and are good viscosity reducers , but in some cases are not as reactive as the polyunsaturated monomers.

The polyethylenically unsaturated reactive diluents include polyol polyacrylates and polymethacrylates such as alkane ($C_2$-$C_{16}$) diol diacrylates, aliphatic ($C_2$-$C_{16}$) polyacrylates, alkoxylated aliphatic polyacrylates such as described in U.S. Patent 4,382,135, polyether glycol diacrylates and the like. Typical of the foregoing are 1,6-hexanediol diacrylate, neopentyl glycol diacrylate, 1,3-butylene glycol diacrylate, tripropylene glycol diacrylate, polyethylene glycol 200 diacrylate and tetraethylene glycol diacrylate. Other polyunsaturated reactive diluents are allyl acrylates such as allylmethacrylate, acrylated epoxies, aminoplast acrylates and unsaturated polyesters; trimethylol propane based polyacrylates such as trimethylolpropane triacrylate; the pentaerythritol-based polyacrylates or polymethacrylates described in U.S. Patent 4,399,192; acrylic oligomers; acrylated polymer or oil such as acrylated epoxidized drying-type oils, acrylated bisphenol A/epoxy resins, ethoxylated bisphenol A diacrylate, acrylated urethane prepolymers (also known as "acrylated polyurethanes"), polyethers, silicones, and the like.

The reactive diluents are conventionally sold with a free radical polymerization inhibitor content ranging from about 25 to 2000 ppm. Of course, if the reactive diluents are produced at the site of radiation curing, little or no inhibitor need be present in the diluents.

The foregoing and other reactive diluents (and inhibitors if used) are widely known and are described in the patent and other literature, such as component (1) of U.S. Patent 3,368,900, component (2) of U.S. Patents 3,380,831 and 3,594,410, the polymerizable vehicles disclosed in U.S. Patents 4,163,809 and 4,481,258, and the acrylated polymer or oils, acrylic oligomers and other radiation curable component (b) compounds disclosed in U.S. Patent 4,360,540. All of the aforementioned patents, descriptive of reactive diluents useful in the present invention, are incorporated herein by reference.

In addition to reactivity and desired degree of crosslinkability, the reactive diluents will be selected on the basis of their solvency for the macromonomer component and their contribution to the viscosity of the resulting solutions. Generally, the less polar the reactive diluent the greater the solvency for the macromonomer. Solvency and viscosity can be determined conveniently by preparing mixtures of macromonomer and diluent over a range of concentrations, noting the clarity and compatibilities, and measuring the viscosities. In those cases where solvency in a single diluent is insufficient, one or more other diluents may be added to optimize compatibility. The higher the molecular weight of the macromonomer the less soluble

the macromonomer will be in some of the reactive diluents. Accordingly, molecular weight of macromonomer must be balanced with the ease with which solutions can be formed and acceptability of the resulting viscosities and properties relative to the specific printing application. If the intended printing use is web-feed printing, for example, high cure rate is critical, and therefore lower macromonomer molecular weight, e.g., not over 10,000, alone or coupled with a high proportion of polyfunctional reactive diluent (e.g., over 50% by weight of the total diluent) may be required in order to obtain good results. In screen printing, however, high cure rate is not as important as clarity of the print; hence lesser amounts of polyfunctional reactive diluent and/or higher molecular weight macromonomer may be acceptable. The formulator of radiation curable inks is well aware of all of the foregoing and other considerations and can make appropriate selections of components of the inks and proportions by routine experimentation and judgment in order to obtain a desired balance of properties.

A non-reactive solvent may also be added to the curable compositions to provide better flow or wetting. The solvents may be flashed off before irradiation or left in the ink during the cure. Representative nonreactive solvents are ethyl alcohol, isopropyl alcohol, methyethyl ketone, dichloromethane and other industrial solvents. In some cases the solvents also impart improved abrasion resistance to the cured inks.

Depending upon the radiation source and wavelength used in curing the inks, the inks may also contain a radiation responsive free radical initiator (C). If the radiation source is high energy, such as electron beam, little or no initiator may be required. If the radiation is lower energy, e.g., ultraviolet light, or if the inks contains components (e.g., radiation absorbers, inhibitors) which interfere with or block the irradiation, an initiator normally will be used. The amount of initiator, when used, and the irradiation time will be dependent on the type and amounts of radiation curable components in the ink and thickness of the ink film. For example, if the ink contains a high proportion of highly reactive diluents, the quantum and/or time of irradiation may be less. Generally, the sources of irradiation may be electron beams, gamma radiation emitters, carbon arcs, mercury vapor arcs, ultraviolet light sources such as phosphors, argon glow lamps and photographic flood lamps; accelerators including Vandergraaf and Betatron linear accelerators, and the like including combinations thereof. Higher photoinitiator concentrations or high energy irradiation, such as electron beams, may be required with or without an initiator, as the ink film increases in thickness.

Initiators include any radiation responsive free-radical generating compounds known in the art for such purpose, such as the UV responsive photoinitiators 2,2-dimethoxy-2-phenyl acetophenone, 2-hydroxy-2-methyl-1-phenyl propan-1-one, benzoin, benzoin methyl ether, Michler's ketone, diphenyldisulfide, dibenzyldisulfide, benzil, benzophenone, xanthane, and various other acetophenones. Accelerators such as tertiary amines may also be added. Peroxide or azo initiators may also be used, such as benzoyl peroxide or 2,2'-azobis (isobutyronitrile), in conjunction with the free radical initiators. The foregoing and other aspects of radiation curing of polymerizable inks are well-known and are non-critical to practice of the invention. Further details may be found in technical articles on the subject such as "Radiation Curing" and "Radiation-Cure Inks" in the Encyclopedia of Chemical Technology, Ed, Kirk-Othmer, 3rd Edition, Volume 19, pages 607-624, and Volume 13, pages 385-386, respectively; "Ultraviolet Curing Inks", J. Radiation Curing, January 1979, pages 18-23; "Chemistry off Radiation", American Ink Maker, January 1981, pages 20-26, 49; and "The Chemistry of Ultraviolet Cured Printing Inks", Radiation Curing, May 1979, pages 14-19. These articles and citations therein are incorporated herein by reference.

The colorants include pigments (both organic and inorganic), dyes, color extenders, color precursors, color developers, color formers and thermographic additives known in the art. In some cases the colorants can be dispersed directly in the solution of macromonomer in reactive diluent. In other cases, the colorant is first dispersed or dissolved in an organic solvent, which mixture is then added to the macromonomer/reactive diluent solution. The amount of colorant is not critical and can be selected for optimum effect. However, heavily pigmented inks may require electron beam or other high energy irradiation for effective cure, and cure rate is usually slower for blue and black inks than for red and yellow inks, due to higher energy absorption by the former.

The radiation curable inks of the invention are effective without additives. For example, a mixture of about 30 wt.% of a styrene-based macromonomer of about 4,500 molecular weight, about 60 wt.% of a mixture of polyfunctional reactive diluent, about 5 wt.% of a photoinitiator and about 5% of phthalocyanine blue provides an excellent ink which rapidly cures upon exposure to UV radiation to a clear, durable, high quality print.

Generally, the additives should be non-reactive with the macromonomer, i.e., will not copolymerize therewith, and should disperse well in the solution of macromonomer in reactive diluent. Preferably, the additives should dissolve in such solution and should not interfere in the dissolving of the macromonomer by the reactive diluent.

Useful additives include slip modifiers, thixotropic agents, tack reducing agents, flow and other rheology

control agents such as the solvents mentioned above, waxes, plasticizers, stabilizers such as antioxidants to increase shelf-life, anti-misting agents, fillers such as various silica derivatives, the organophilic clay gellants described in U.S. patent 4,475,950, opacifiers, melting agents and surfactants to aid in colorant dispersion, adhesion promoters, and others known in the art. Furthermore, oligomeric materials other than reactive types used as reactive diluents may be added, as bodying agents or for other properties. Such materials include polyesters such as polyethylene polyurethanes of U.S. Patent 4,183,796, the acrylic acid adducts of epoxidized phenolformaldehyde adducts, acrylic acid adducts of the diglycidyl ether of bisphenol A, acrylic acid adducts of soybean oil, the monohydroxy vinyl compound-epoxy adducts of U.S. Patent 4,025,548 wherein the vinyl compound may be a vinyl, allylic, acrylic or methacrylic material, crosslinkable oils and oligomers such as are described in U.S. Patent 3,912,670, and reaction products of 1-alkenes and acrylic derivatives such as described in U.S. Patent 4,009,195.

The inks are prepared in the conventional manner, for example by adding the colorants, initiator and other additives to the solution of macromonomer in reactive diluent and then milling the mixture under suitable conditions of agitation and temperature to obtain a uniform blend. The ink is then applied in the normal fashion to the substrate to be printed, such as paper, resin-coated paper, foil, metal, plastic films and sheeting, using screen-printing, webfeeds, stamping or any other of the many well-known printing techniques. Upon radiation curing (simultaneously with or after printing) and depending on the type and proportions of the primary components and special additives, highly durable (rub, scuff and chemically resistant) print and coloration are obtained, at controllable cure rate and high production speed, and usually at ambient temperatures.

When using the printing inks of the invention, dry trapping ability (improved print quality and color development) is exhibited without the polluting and adhesive cost consequences of organic solvents, and the inks are press stable (remain liquid for indefinite periods). Moreover, the inks provide the capability of printing heat sensitive substrates (since little heat is generated during radiation curing) and the resulting print is high quality with improved ink holdout and sharper indicia format or dots.

The combination of high molecular weight and low reactive functionality of the macromonomer component offers the unique advantages of reduced shrinkage of the total ink composition upon cure and greatly enhanced adhesion to the substrate being printed. The reduced shrinkage results in lower stresses and strains at the bonding interface to which inks containing the macromonomers of the present invention are subject during the radiation curing process, as compared with other known radiation curable inks.

The following example will serve to illustrate the invention, but it is understood that this example as well as other embodiments set forth in this specification are merely representative of the invention. In the example and throughout the specification and claims, all parts and percentages are by weight unless otherwise expressly stated.

MACROMONOMER PREPARATION

A glass and stainless steel reactor was charged with 1100 grams of cyclohexane (pre-dried over molecular sieves) and 400 grams of styrene purified over activated alumina. The reactor temperature was raised to 70 °C and s-butyllithium solution (1.4M in cyclohexane) was slowly added until a persistant light reddish-orange color was obtained. An additional 100 ml (0.140 moles) of s-butyllithium was immediately added. Styrene was then pumped into the reactor for 30 minutes until a total of 1820 grams had been added. The temperature was maintained at 70 °C for 30 minutes and then 12.3 grams of ethylene oxide (0.28 moles) was added causing the solution to become colorless. To the resulting solution was added 16.1 grams (0.154 moles) of methacryloyl chloride to give upon removal of cyclohexane a macromolecular monomer of 13,000 molecular weight, measured by GPC, having the following structural formula:

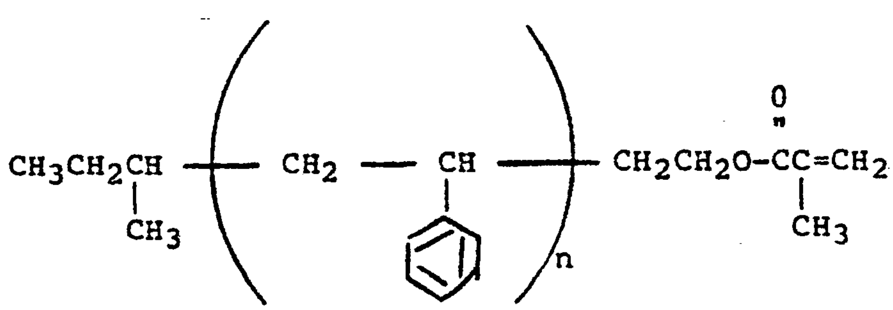

where n has a value such that the molecular weight is 13,000. In the following formulation this macromonomer after purification as described below is identified as Macromonomer A.

In a similar synthesis, a macromonomer of the same structure was prepared but having a molecular weight, measured by GPC, of 4500. This macromonomer after purification as described below is designated Macromonomer B in the following formulations.

Lithium chloride causes cloudiness in toluene solutions when the macromonomer is redissolved. The macromonomer product of each synthesis is therefore purified by dissolving solid macromonomer in toluene to form a 40 percent by weight solution. This solution is filtered through a half-inch bed of Celite 545 filter aid (Fisher) using water aspiraton suction. The filtered toluene/Macromonomer solution is reprecipitated into excess methanol and vacuum dried. Chloride content is decreased from 7000 ppm to 460 ppm and lithium content from 487 ppm to 60 ppm by this filtering operation.

EXAMPLE

The following formulations (1), (2) and (3) were prepared based on Macromonomer A or B:

| | Formulation - WT. % | | | |
|---|---|---|---|---|
| | (1) | (2) | (3) | (4) |
| Macromonomer A | | 30 | | 18 |
| Macromonomer B | 32 | | 32 | 12 |
| 1,6-hexane diol diacrylate | 40 | 20 | | 12 |
| trimethylolpropane triacrylate | 13 | 39.6 | 55 | 48 |
| Irgacure 500[1] photoinitiator | 5 | 5 | 5 | 5 |
| phthalocyanine blue | 10 | 5.4 | 8 | 5 |
| | 100 | 100 | 100 | 100 |

1 1:1 benzophenone: 1-hydroxycyclohexylphenyl ketone (Ciba-Geigy Corp)

The formulations were each printed onto glass, metal and polyvinyl chloride tile substrates using a rubber stamp in one test series and a stencil in a second test series. The prints were then exposed to ultraviolet light from a medium pressure mercury arc lamp. Cure was essentially instantaneous. Good quality, strongly adherent, hard and durable prints were obtained which exhibited excellent resistance to smudging, peeling and organic solvents.

## Claims

1. A radiation curable printing ink comprising a mixture of an oligomer or prepolymer and an effective amount of a colorant in a liquid radiation - polymerisable monomeric diluent characterised in that:

   (A) said oligomer or prepolymer comprises a thermoplastic macromonomer of the formula:

   $$R\{Z\}_n X$$

   wherein R is a hydrocarbon group containing up to 20 carbon atoms, Z is a vinyl aromatic monomer, n is a positive integer such that the number average molecular weight of $\{Z\}_n$ is 2,000 - 50,000, and X is a polymerisable ethylenically unsaturated end group, and said macromonomer forms 5 to 80% by weight of the mixture;

   (B) said liquid radiation polymerisable monomeric diluent forms 20 - 95% by weight of the mixture and at least 10% by weight of said diluent is a polyethylenically unsaturated material; and

   (C) said ink also includes 0 to 20% by weight of a radiation responsive free radical initiator.

2. The ink of claim 1 wherein, in the formula $R\{Z\}_n X$, X is selected from:

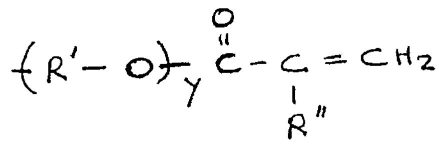

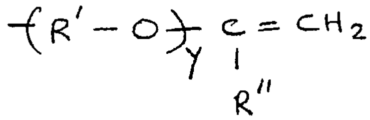

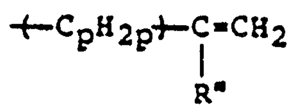

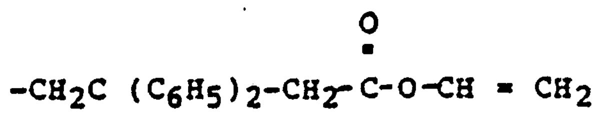

$-CH_2C_6H_4\ CH = CH_2$ and

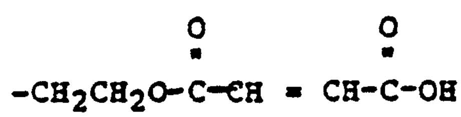

wherein R' is phenylethylene or $C_m H_{2m}$, m is 2, 3, or 4, P is a positive integer of from 2 to 8, y is a positive integer of from 1 to 50, and R" is hydrogen or lower alkyl.

3. The ink of claim 1 wherein, in the formula $R(Z)_nX$, R is lower alkyl, Z is phenylethylene and X is

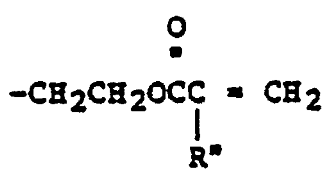

where R" is hydrogen or methyl.

4. The ink of any one of claims 1 to 3 wherein the amount of (C) is 5 to 15%.

5. The ink of any one of claims 1 to 4 in which said component (B) comprises one or more free radical polymerisable, radiation curable, substantially non-volatile, liquid monomers or oligomers of up to 2000 molecular weight.

6. The ink of any one of claims 1 to 5 wherein the predominant portion of (B) is a polyethylenically unsaturated material.

7. The ink of claim 6 wherein said polyethylenically unsaturated material is selected from an alkane diol diacrylate, an aliphatic polyacrylate, an alkoxylated aliphatic polyacrylate, a polyether glycol diacrylate and mixtures thereof.

8. The ink of any one of claims 1 to 7 wherein the amount of (A) is 10-50% by weight and the amount of (B) is 50-90% by weight.

9. The ink of any one of claims 1 to 8 wherein the amount of colorants is 1-30% by weight.

10. The ink of any one of claims 1 to 9 wherein the colorant is a pigment in an amount of 10-25% by weight.

11. A printing process wherein coloration or indicia are established with an ink on an ink receptive substrate and the inked coloration or indicia are then subjected to actinic radiation, and in which the ink comprises a composition as claimed in any one of claims 1 to 10.

**Revendications**

1. Encre d'imprimerie durcissable par irradiation comprenant un mélange d'un oligomère ou d'un prépolymère et d'une quantité efficace d'un colorant dans un diluant liquide monomère polymérisable par irradiation, caractérisée en ce que:

(A) cet oligomère ou ce prépolymère comprend un macromonomère thermoplastique de formule:

$R\text{-}(Z)_n\text{-}X$

dans laquelle R est un groupe hydrocarboné contenant jusqu'à 20 atomes de carbone, Z est un monomère aromatique vinylique, n est un entier positif tel que le poids moléculaire moyen en nombre de $-(Z)_n-$ est de 2.000 à 50.000, et X est un groupe terminal éthyléniquement insaturé polymérisable, ce macromonomère formant de 5 à 80% en poids du mélange;

(B) ce diluant liquide monomère polymérisable par irradiation représente de 20 à 95% en poids du mélange et au moins 10% en poids de ce diluant sont constitués par une matière insaturée polyéthyléniquement; et

(C) cette encre comprend aussi de 0 à 20% en poids d'un initiateur de radicaux libres sensible à l'irradiation.

2. Encre suivant la revendication 1, caractérisée en ce que dans la formule $R\text{-}(Z)_n\text{-}X$, X est choisi parmi

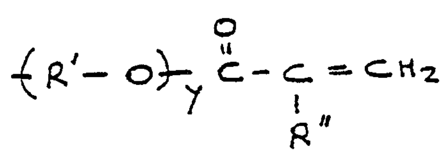

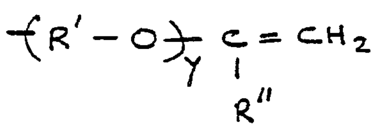

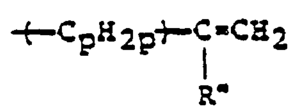

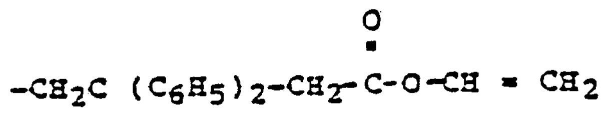

$-CH_2C_6H_4\ CH = CH_2$

et

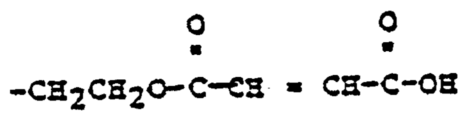

où R' est un radical phényléthylène ou $C_mH_{2m}$, m est égal à 2, 3 ou 4, p est un entier positif de 2 à 8, y est un entier positif de 1 à 50 et R'' est un atome d'hydrogène ou un groupe alkyle inférieur.

3. Encre suivant la revendication 1, caractérisée en ce que dans la formule $R-(Z)_n-X$, R est un groupe alkyle inférieur, Z est un radical phényléthylène et X est un radical

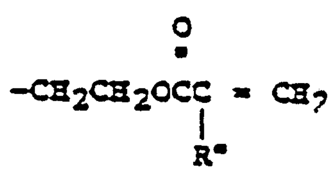

où R'' est un atome d'hydrogène ou un groupe méthyle.

4. Encre suivant l'une quelconque des revendications 1 à 3, caractérisée en ce que la quantité de (C) est de 5 à 15%,

5. Encre suivant l'une quelconque des revendications 1 à 4, caractérisée en ce que ce composant (B) comprend un ou plusieurs monomères ou oligomères ayant un poids moléculaire allant jusqu'à 2000, liquides, pratiquement non volatils, durcissables par irradiation, polymérisables par des radicaux libres,

6. Encre suivant l'une quelconque des revendications 1 à 5, caractérisée en ce que la partie prédominante de (B) est une matière insaturée polyéthyléniquement

7. Encre suivant la revendication 6, caractérisée en ce que cette matière insaturée polyéthyléniquement est choisie parmi un diacrylate d'alcane diol, un polyacrylate aliphatique, un polyacrylate aliphatique alcoxylé, un diacrylate de polyéther glycol et leurs mélanges.

8. Encre suivant l'une quelconque des revendications 1 à 7, caractérisée en ce que la quantité de (A) est de 10 à 50% en poids et que la quantité de (B) est de 50 à 90% en poids.

9. Encre suivant l'une quelconque des revendications 1 à B, caractérisée en ce que la quantité de colorants est de 1 à 30% en poids.

10. Encre suivant l'une quelconque des revendications 1 à 9, caractérisée en ce que le colorant est un pigment présent en une quantité de 10 à 25% en poids.

11. Procédé d'impression dans lequel une coloration ou des signes sont créés avec une encre sur un substrat réceptif à l'encre et dans lequel la coloration ou les signes encrés sont ensuite soumis à une radiation actinique, caractérisé en ce que l'encre comprend une composition suivant l'une quelconque des revendications 1 à 10.

**Patentansprüche**

1. Durch Strahlung trockenbare Druckfarbe, umfassend eine Mischung aus einem Oligomer oder Prepolymer und eine wirksame Menge eines Färbemittels in einem flüssigen, durch Strahlung polymerisierbaren monomeren Verdünnungsmittel, dadurch gekennzeichnet, daß

   (A) das Oligomer oder Prepolymer ein thermoplastisches Makromonomer der Formel

   $R\text{-}(Z)_n\text{-}X$

   umfaßt, worin R eine bis zu 20 Kohlenstoffatome enthaltende Kohlenwasserstoffgruppe ist, Z ein vinylaromatisches Monomer ist, n eine positive ganze Zahl in der Weise ist, daß das Zahlenmittel des Molekulargewichts von $-(Z)_n-$ 2.000 bis 50.000 ist, und X eine polymerisierbare, ethylenisch ungesättigte Endgruppe ist, und das Makromonomer 5 bis 80 Gew.-% der Mischung ausmacht;

   (B) das flüssige, durch Strahlung polymerisierbare monomere Verdünnungsmittel 20 bis 95 Gew.-% der Mischung ausmacht und wenigstens 10 Gew.-% des Verdünnungsmittels ein polyethylenisch ungesättigtes Material sind; und

   (C) die Druckfarbe auch 0 bis 20 Gew.-% eines auf Strahlung reagierenden Initiators freier Radikale einschließt.

2. Druckfarbe nach Anspruch 1, worin in der Formel $R\text{-}(Z)_n\text{-}X$ X gewählt ist unter

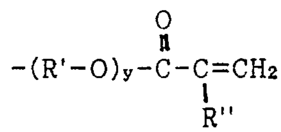

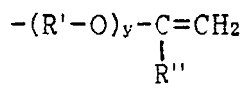

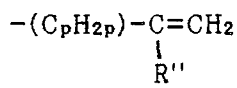

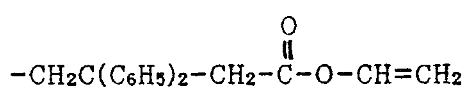

$-CH_2C_6H_4HC{=}CH_2$ und

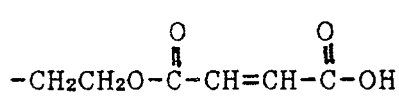

worin R' ein Phenylethylenrest oder $C_mH_{2m}$ ist, m 2, 3 oder 4 ist, p eine positive ganze Zahl im Bereich von 2 bis 8 ist, y eine positive ganze Zahl im Bereich von 1 bis 50 ist und R'' Wasserstoff oder ein niederer Alkylrest ist.

3. Druckfarbe nach Anspruch 1, worin in der Formel $R\text{-}(Z)_n\text{-}X$ R ein Niederalkylrest ist, Z Phenylethylen ist und X

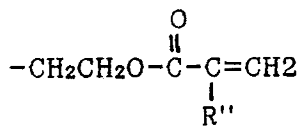 ist,

worin R" Wasserstoff oder Methyl ist.

4. Druckfarbe nach irgendeinem der Ansprüche 1 bis 3, worin die Menge an Komponente (c) 5 bis 15 % beträgt.

5. Druckfarbe nach irgendeinem der Ansprüche 1 bis 4, worin die Komponente (B) ein oder mehrere mittels freier Radikale polymerisierbare(s), durch Strahlung härtbare(s), im wesentlichen nichtflüchtige-(s) flüssige(s) Monomer(e) oder Oligomer(e) eines Molekulargewichts bis zu 2.000 umfaßt.

6. Druckfarbe nach irgendeinem der Ansprüche 1 bis 5, worin der überwiegende Teil von (B) ein polyethylenisch ungesättigtes Material ist.

7. Druckfarbe nach Anspruch 6, worin das polyethylenisch ungesättigte Material gewählt ist unter Alkandioldiacrylat, aliphatisches Polyacrylat, alkoxyliertes aliphatisches Polyacrylat, Polyetherglykoldiacrylat und deren Mischungen.

8. Druckfarbe nach irgendeinem der Ansprüche 1 bis 7, worin die Menge an (A) 10 bis 50 Gew.-% und die Menge an (B) 50 bis 90 Gew.-% beträgt.

9. Druckfarbe nach irgendeinem der Ansprüche 1 bis 8, worin die Menge an Färbemitteln 1 bis 30 Gew.-% beträgt.

10. Druckfarbe nach irgendeinem der Ansprüche 1 bis 9, worin das Färbemittel ein Pigment in einer Menge von 10 bis 25 Gew.-% ist.

11. Druckverfahren, worin Färbung oder Stempeldruck mit einer Druckfarbe auf einem für Druckfarbe aufnahmefähigen Substrat bewirkt und die Druckfarbe-Färbung oder der Druckfarbe-Stempeldruck danach aktinischer Strahlung ausgesetzt werden, und worin die Druckfarbe eine Zusammensetzung umfaßt, wie sie in irgendeinem der Ansprüche 1 bis 10 beansprucht wird.